(19) Europäisches Patentamt
European Patent Office
Office européen des brevets

(11) **EP 4 723 631 A1**

(12) **EUROPEAN PATENT APPLICATION**

(43) Date of publication:
**08.04.2026 Bulletin 2026/15**

(21) Application number: **24306610.7**

(22) Date of filing: **01.10.2024**

(51) International Patent Classification (IPC):
*H04N 19/154* (2014.01)     *H04N 19/156* (2014.01)
*H04N 21/2343* (2011.01)     *H04N 21/845* (2011.01)

(52) Cooperative Patent Classification (CPC):
**H04N 19/156; H04N 19/154; H04N 21/23439;
H04N 21/8456;** H04N 21/4436

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **AUMONT, Franck
  35770 VERN SUR SEICHE (FR)**
• **HOUSSAINY, Hadi
  35700 RENNES (FR)**
• **LE MEUR, Olivier
  35160 TALENSAC (FR)**
• **DEMARTY, Claire-Helene
  35520 MONTREUIL LE GAST (FR)**

(74) Representative: **Vossius & Partner
Patentanwälte Rechtsanwälte mbB
Siebertstraße 3
81675 München (DE)**

(54) **ENERGY AWARE BITRATE LADDER**

(57)     Systems, methods, and instrumentalities for constructing an energy aware bitrate ladder. An example device may obtain an indication of a quality metric that represents a trade-off between content features and a parameter associated with energy consumption. The device may determine, based on the quality metric, a plurality of quality metric values associated with a plurality of resolutions. The device may determine, based on the plurality of quality metric values, an acceptable set of resolutions from the plurality of resolutions. The device may determine, based on quality metric values associated with the acceptable set of resolutions, a plurality of energy reduction rates associated with the acceptable set of resolutions. The device may select, from the acceptable set of resolutions, a smallest resolution with an energy reduction rate that is less than a maximum energy reduction rate and assign that resolution to a bitrate.

FIG. 7

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for constructing an energy aware bitrate ladder. An example device may obtain an indication of a quality metric that represents a trade-off between content features and a parameter associated with energy consumption. The device may determine, based on the quality metric, a plurality of quality metric values associated with a plurality of resolutions. The device may determine, based on the plurality of quality metric values, an acceptable set of resolutions from the plurality of resolutions. The device may determine, based on quality metric values associated with the acceptable set of resolutions, a plurality of energy reduction rates associated with the acceptable set of resolutions. The device may select, from the acceptable set of resolutions, a smallest resolution with an energy reduction rate that is less than a maximum energy reduction rate. The device may assign the smallest resolution with the energy reduction rate that is less than the maximum energy reduction rate to a bitrate.

The parameter associated with energy consumption may be, for example, the bitrate, a resolution associated with a given quality metric value, or a codec. The device may place the plurality of resolutions in an order based on the plurality of quality metric values. The device may determine the acceptable set of resolutions from the plurality of resolutions based on the order of the plurality of resolutions. The order may be an ascending order from lowest quality metric value to highest quality metric value.

The device may place the plurality of resolutions in an order from lowest quality metric value to highest quality metric value. The device may determine that the acceptable set of resolutions includes a smallest resolution in the plurality of resolutions and any resolutions associated with a quality metric value greater than a quality metric value associated with the smallest resolution in the plurality of resolutions. The device may add the bitrate and the smallest resolution with the energy reduction rate that is less than the maximum energy reduction rate to a bit rate ladder.

The bitrate may be a first bitrate. The smallest resolution with the energy reduction rate that is less than the maximum energy reduction rate may be associated with a quality metric value. The device may, for a second bitrate, determine a minimum quality metric value based on the quality metric value associated with the smallest resolution with the energy reduction rate that is less than the maximum energy reduction rate. The device may determine, based on the quality metric, a second plurality of quality metric values associated with the plurality of resolutions. The device may determine, based on the second plurality of quality metric values and the minimum quality metric value, a second acceptable set of resolutions from the plurality of resolutions. The device may select, from the second acceptable set of resolutions, a resolution to assign to the second bitrate.

The minimum quality metric value may be determined based on a sum of a just noticeable difference (JND) step value and the quality metric value associated with the smallest resolution with the energy reduction rate that is less than the maximum energy reduction rate (e.g., add the quality metric from the previous bitrate, for example, the JND step value plus the first bitrate in the case of the second bitrate). The quality metric may be one of peak signal-to-noise ratio of a Y component (Y-PSNR), multi-scale structural similarity index measure (MSSIM), or video multi-method assessment fusion (VMAF), and/or the like.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 shows an example block diagram of a system for dynamic adaptive streaming over HyperText Transfer Protocol (DASH).

FIG. 5 shows an example media presentation description (MPD) XML file.

FIGs. 6A-C shows example encoding and decoding energy consumption for 300 videos encoded in five resolutions, six QP values, and three codecs.

FIG. 7 shows an example block diagram of a representation selection algorithm.

FIG. 8 shows an example block diagram of a representation selection algorithm from a current window.

FIG. 9 shows an example resolution window constructed for a bitrate.

FIG. 10 shows an example resolution window for a bitrate sorted from a lower to a higher quality.

FIG. 11 shows an example of sorting a current window by quality and resolution.

FIG. 12 shows an example threshold distribution on acceptable window elements.

FIG. 13 shows an example energy, quality, and bitrate variation of a content after encoding in different ladders at a reduction rate (RR).

FIG. 14 shows example quality-bitrate curves for an RR of 0, 60, and 100.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

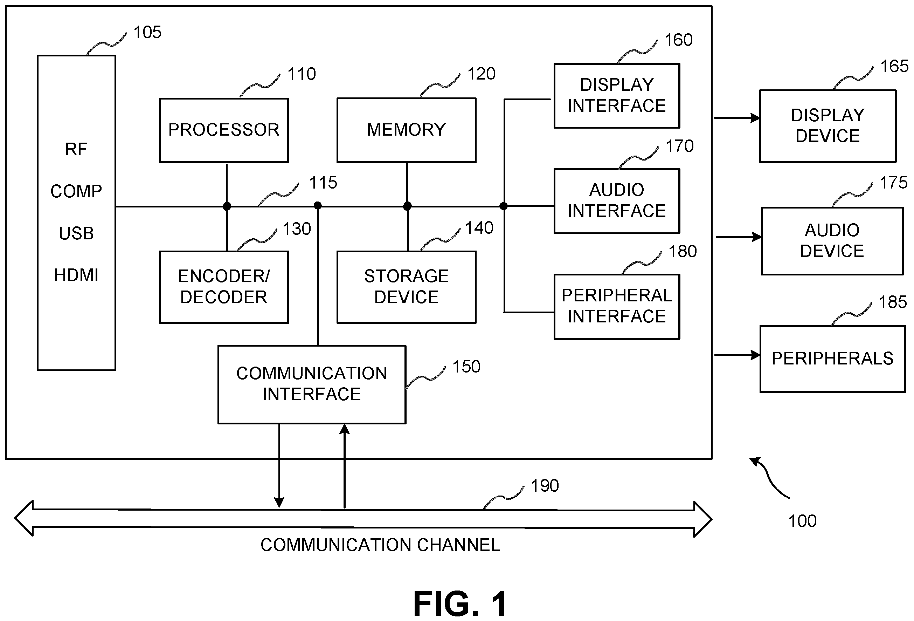

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., over-the-top (OTT) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

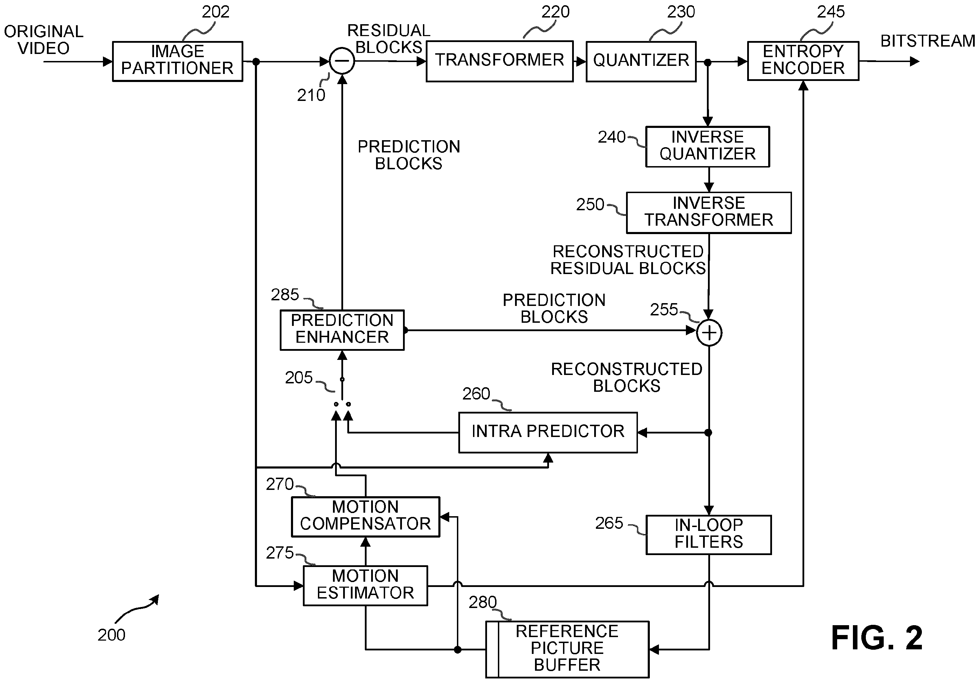

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

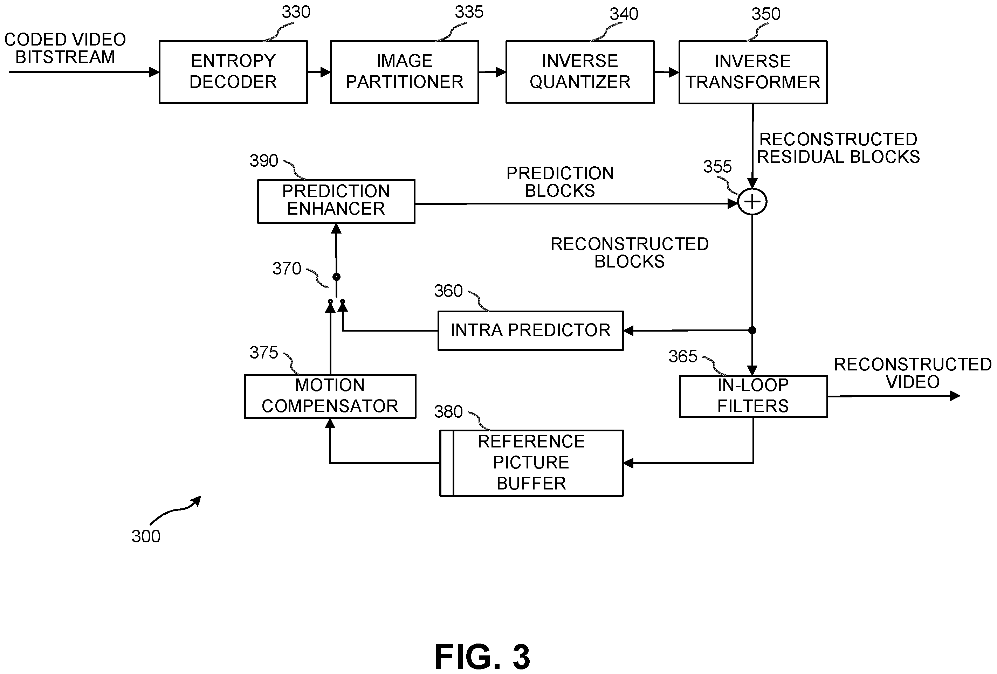

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Encoding and/or decoding tasks in the video chain over a fixed or mobile network in an adaptive streaming context may be described herein. Features described here may be related to communications systems for video streaming that aim to provide signaling mechanisms to enable a device to control the energy usage and/or the rendered video quality in the context of adaptive streaming (e.g., MPEG-dynamic adaptive streaming over HTTP (DASH)) on a device (e.g., a desktop or laptop computer, a smartphone, a tablet, a set-top box, or a television connected to the internet).

Reducing the carbon footprint and/or energy consumption of electronic devices has become a requirement not only for electronic devices manufacturers, but also as a way to limit, as much as possible, environmental impact(s) and to contribute to the emergence of sustainable video streaming.

The increase of video streaming services has brought about a corresponding increase in energy requirements for devices. Examples of increases in video streaming services include multiple resolution(s) (e.g., from SD to HD to 4K and soon to 8K and beyond), the number of delivery functions (e.g., pre-processing, upscaling, downscaling, encoding, transcoding, distribution, decoding, rendering, and/or the like), the number of codecs, the number of different end user device profiles, and/or the number of video format(s) (e.g., high dynamic range versus standard dynamic range). Increased energy requirements may not be consistent with the global need to reduce energy consumption and/or reduce the energy consumption of playback devices (e.g., while still maintaining a high Quality of Experience (QoE)).

HyperText transfer protocol (HTTP) adaptive streaming (HAS) may be increasingly adopted by OTT-based video streaming services because HAS may allow clients (e.g., a HAS client) to dynamically switch among one or more stream representations selected from a bitrate and/or resolution ladder. An approach for the client may be to select a representation considering its downlink bandwidth condition and/or its resolution to preserve its QoE. The bitrate ladder may be generated using one or more (e.g., several) approaches. For example, the bitrate ladder may be generated using a static approach that considers a set of bitrate/resolution pairs for a video (e.g., all the videos, whatever the content). For example, the bitrate ladder may be generated using an approach of intensive encoding of resolutions over a bitrate range (e.g., encoding all resolutions over a wide bitrate range) to construct the convex hull. For example, the bitrate ladder may be generated using an approach using a machine learning content-based prediction (e.g., without performing an exhaustive search).

One or more (e.g., any) of these approaches may consider their energy consumption and/or their carbon footprint. These approaches are used for video service streaming, which may represent near 80% of the Information and Communication Technology (ICT) traffic. A question may be raised to know how to reduce the energy consumption required to transmit an asset (e.g., video asset) of a video service, from the post-production up to the renderer of the end user device with these approaches (e.g., globally or per streaming chain function to adapt the end user device strategy when the video device selects a representation, for example, upon request from the end user, in case of an energy-aware bitrate ladder and an energy-aware user profile).

Features described herein may aim to improve DASH by proposing systems, devices, and/or methods to generate an energy aware bitrate ladder (e.g., at the server side). Features described herein may signal an energy aware bitrate ladder by an energy aware media presentation description (MPD) manifest file with a reduced number of energy aware representations optimizing the perceptual quality for the end-user (e.g., compared to the set of representations in other bitrate ladder proposals). Some representations may optimize the perceptual quality for the end-user and reduce the encoding and decoding energy consumption with the resolution selection.

MPD files may be a manifest file for MPEG DASH streaming. A manifest file may include information and/or a parameter for the video streaming (e.g., such as codec, adaptive bitrate (ABR) and resolution of the video). The MPD may include a description of the resources forming a streaming service (e.g., that a DASH client uses to determine which assets to request, to perform adaptive streaming of the content).

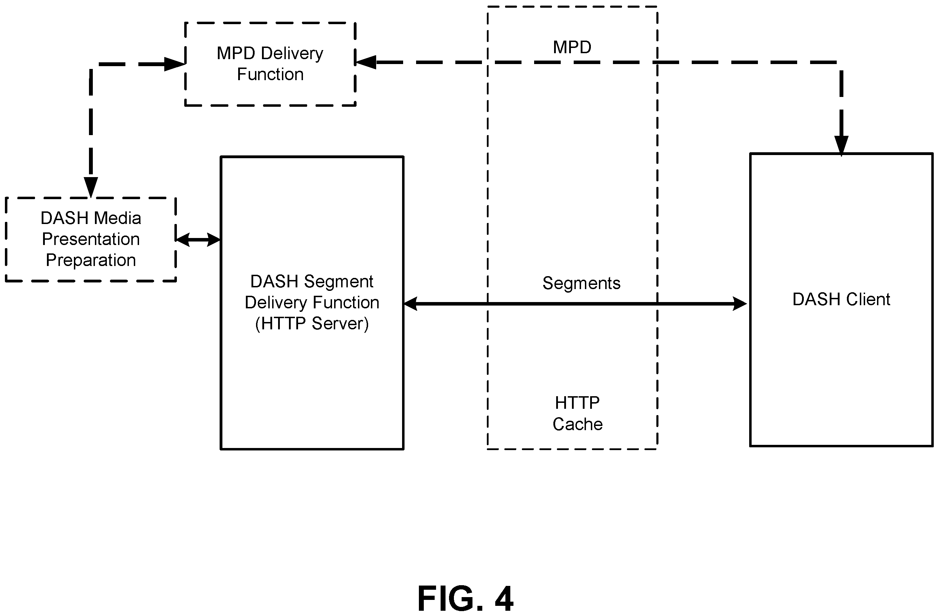

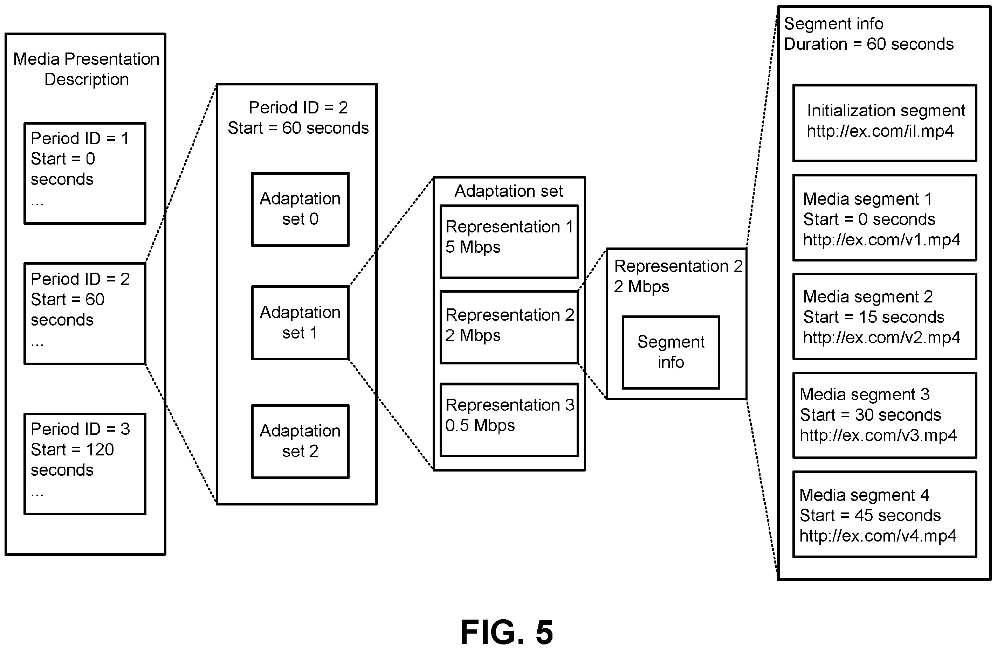

Although features described herein may be based on DASH, one or more features may be generalized to another solution (HLS, and/or the like). The HTTP Adaptative Streaming (HAS) (e.g., Dynamic Adaptive Streaming over HTTP (DASH)) may enable delivery of continuous media content from a (e.g., standard) HTTP server to HTTP clients and/or enable caching of content by a (e.g., standard) HTTP cache. HAS may allow the highest visual quality while influenced by one or more factors such as network bandwidth, display resolution, and/or viewing conditions. FIG. 4 illustrates an example of an overall system for DASH. FIG. 5 is an example of an MPD XML file.

HAS may be increasingly adopted by OTT-based video streaming services because HAS may allow clients to dynamically switch among one or more stream representations that may be signaled in an MPD manifest file. HAS may allow clients to reach the optimal (e.g., best) QoE.

A representation (e.g., each of these representations) may be encoded to target a (e.g., specific) bitrate providing a wide range of operating bitrates known as the bitrate ladder. One or more (e.g., several) approaches with different levels of complexity may be (e.g., currently) used to build a bitrate ladder including: a fixed bitrate ladder, a complex bitrate ladder, a machine learning content-based ladder, and/or a minimized encoding latency bitrate ladder. A fixed bitrate ladder may be a set of bitrate resolution pairs (e.g., called "one-size-fits-all"). A complex bitrate ladder may be based on the intensive encoding of resolutions over a wide bitrate range to construct a convex-hull. A machine learning content-based ladder may be based on the optimization of the bitrate range by analyzing the content and/or determining the optimal (e.g., best) quality versus the bitrate. A minimized encoding latency bitrate ladder may be based on the encoding latency.

Bitrate ladders may be configured to (e.g., may permit to) offer the optimal (e.g., best) end-user QoE (e.g., higher Bjontegaard Delta-Rate bitrate (BD-BR), video stalling limitation, and/or the like), an optimization of the network bandwidth usage (e.g., bitrate budget reduction for a service), and/or the minimization of the encoding latency to reduce the energy required for encoding. In examples, reducing energy may not take into account overall energy consumption of the video streaming chain.

One or more methods for assessing video quality, focusing on objective metrics that correlate with subjective human perception may be described herein. Concepts such as mean opinion score (MOS), just noticeable difference (JND), and/or peak signal-to-noise ratio (PSNR) may be described herein. One or more methods for assessing video quality may outline different approaches to a video quality assessment, including full reference algorithms and/or structural similarity methods like structural similarity index (SSIM) and multi-scale SSIM (MS-SSIM).

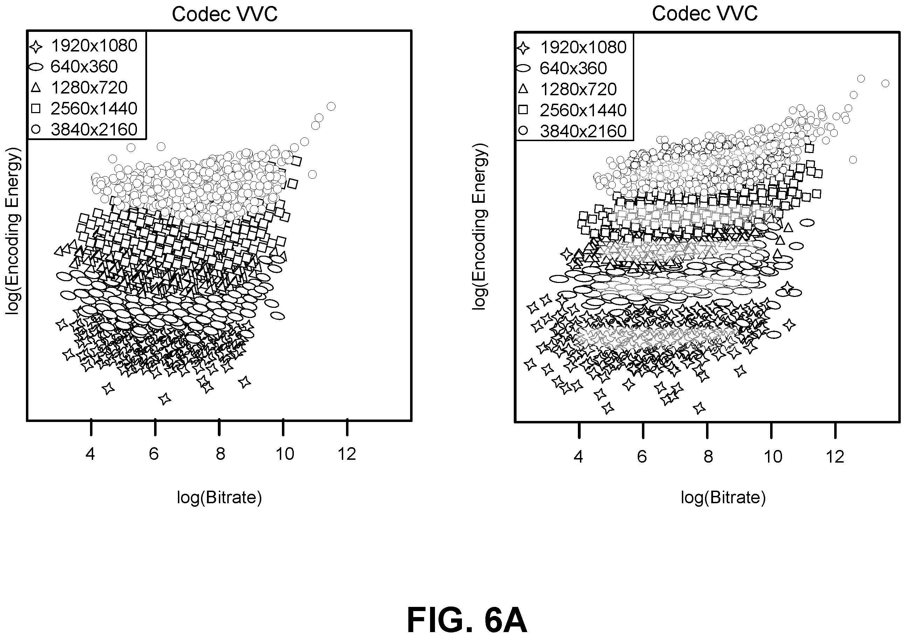

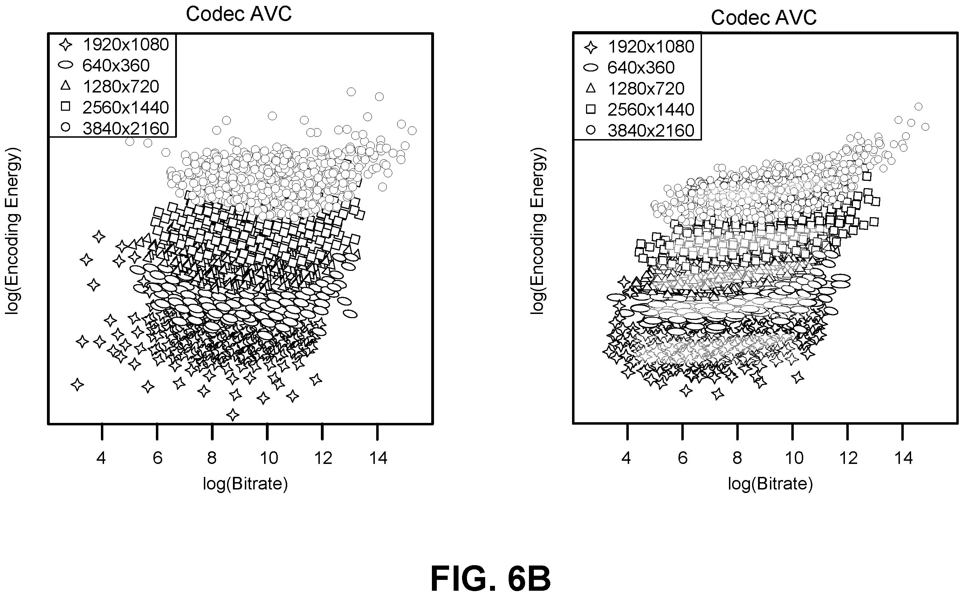

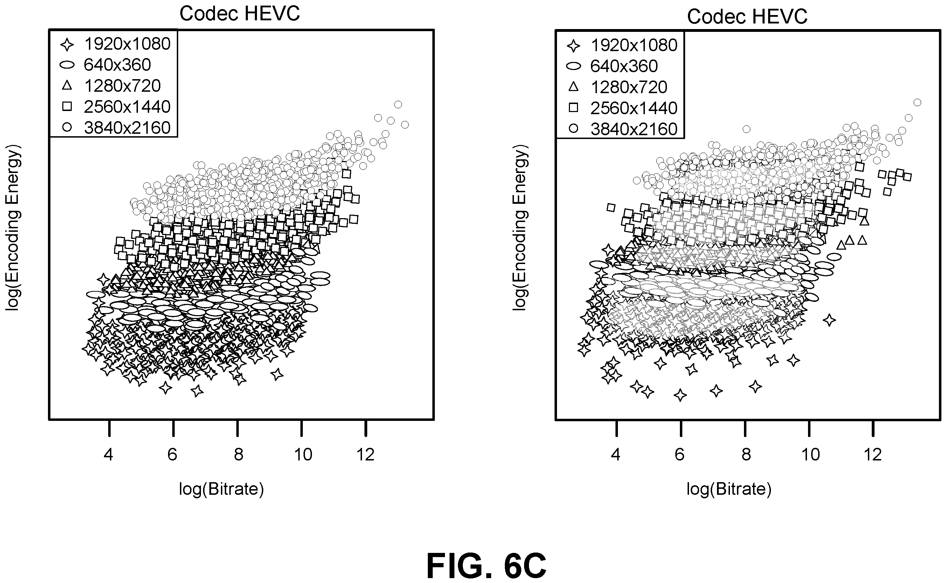

Features described herein aim to reduce energy consumption by limiting the encoding latency. Reducing encoding latency may reduce the encoding energy consumption. Some methods may not consider encoding and decoding energy costs. FIGs. 6A-C illustrates an example of encoding and decoding energy consumption (e.g., for 300 videos encoded in 5 resolutions, 6 QP values, and/or 3 codecs (AVC, HEVC, VVC, etc.)). As illustrated by FIGs. 6A-C, the spatial resolution of the content to encode may account for a large proportion of the energy consumption.

Systems and methods described herein may be implemented at the server side. Such systems and methods may select a resolution for a bitrate (e.g., the lowest resolution for each bitrate) depending on an energy reduction rate, while ensuring that the quality of the stream is not changed (e.g., or remains similar) for the viewers. Features described herein may depend on the quality estimation model to construct the rate-distortion curves for a (e.g., each) resolution in terms of bitrate and/or quality for a segment. Features described herein may depend on the quality estimation model to apply an iterative algorithm over a (e.g., each) bitrate to select the optimal pair (e.g., to select the best pair such as a bitrate and a quality, bitrate and resolution, and/or the like) to reduce energy on the (e.g., both) encoder and/or decoder side(s).

Features described herein may use quality model(s) (e.g., an artificial intelligence (AI) based model) to predict the quality of content before encoding it with a selected bitrate and/or resolution. Streaming platforms may predict the convex hull of their content, to select the optimized bitrate ladder in terms of quality and/or depending on the features of the content.

As illustrated in FIGs. 6A-C, resolution may be one of the impacting factors (e.g., a significant impacting factor) in terms of encoding and/or decoding energy consumption. Based on the analysis as illustrated in FIGs. 6A-C, and to create an energy aware bitrate ladder, a resolution may be used for a representation (e.g., for each representation, the lowest resolution may be used when it is possible) with a condition associated with a delivered quality level and/or a bitrate step, to ensure an acceptable QoE (e.g., the constraint of both the delivered quality level and the bitrate step, to ensure an acceptable QoE).

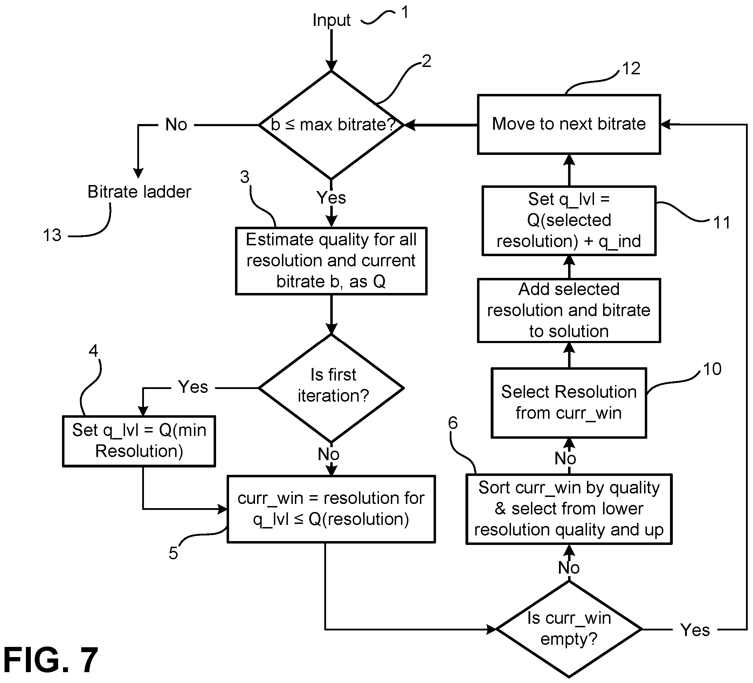

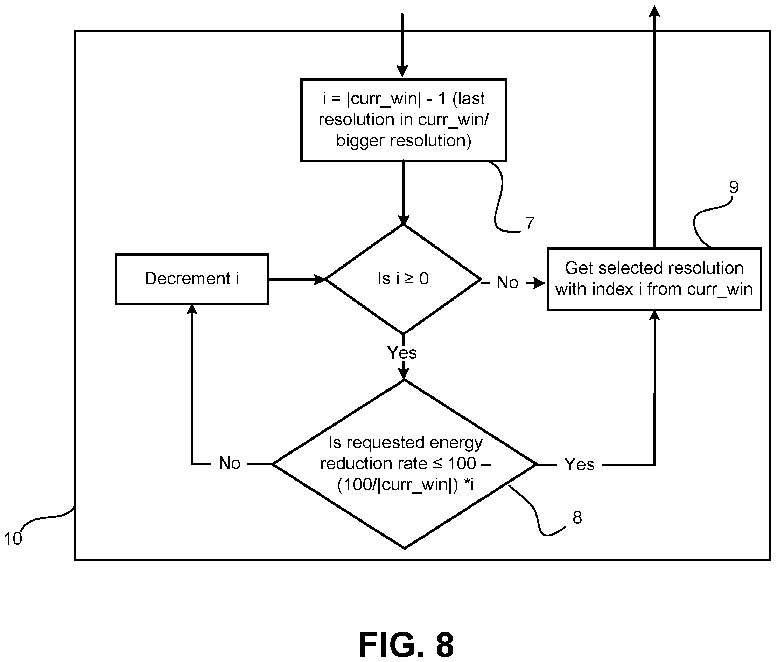

An energy aware bitrate ladder may be constructed as described herein. The pseudo code of an example construction of a bitrate ladder may be shown in the Table 1. A flow diagram illustrating an example bitrate ladder may be shown in FIG. 7 and FIG. 8.

A selection of the representations may follow at least one condition (e.g., three constraints) including: a bitrate step condition (e.g., same step, for example, a power of 2, or a different step from one bitrate to another), a quality level condition, or a resolution condition for energy savings (e.g., a representation may be selected based on at least one condition including a bitrate steps condition, a quality level condition, or a resolution condition for energy savings).

A bitrate steps condition may include a determination that the bitrate difference between a first representation and a second representation (e.g., a difference between a representation and the next representation) is incremental (e.g., of power two). The bitrate difference between representations may be performed, for example, to ensure that the adaptive behavior of the clients may be correct if/when switching from one representation to another (e.g., and no buffer issues are encountered). For example, the following bitrate distribution may be 1 Mb/s, 2Mb/s, 4Mb/s, and/or the like.

A quality level condition may include publishing a first (e.g., one) representation in a quality level (e.g., the same quality level) and/or ensuring a difference between a first representation and a second representation (e.g., ensuring a difference between a first representation equal to the JND and/or a second representation specified by the service provider). Selecting or publishing (e.g., two) representations without a noticeable difference may be a waste of bandwidth. For example, two selected representations may be different from a quality standpoint from at least one JND.

A resolution condition for energy savings may include selecting a resolution based on a reduction rate (RR) to be defined by the service provider or an automation service. Users may not notice a (e.g., any) visual difference, whereas a lower resolution may be used, and/or the energy consumption needed to encode and/or decode the content may be reduced. In examples, for a 100% rate, the lowest resolution may be selected, and/or for a 0% rate, the highest resolution may be selected.

Table 1 is an example of pseudo code of the energy aware bitrate ladder construction.

Table 1: Example pseudo code of the optimized bitrate ladder construction

```
function generate_ladder(resolutions: List, features, b_min: int, b_max: int, q_jnd: float, rate: int) -> List:
    initialize i to 0  # bitrate index is_first_bitrate_flag to 1
    initialize bitrate to b_min # defined a priori by the broadcaster
    initialize q_lvl to 0
    initialize optimizedBitRateLadder to an empty list

    sort resolutions by pixel count and store in sorted_resolutions

    while bitrate is less than or equal to b_max:
        # Compute quality of each resolution for the given bitrate
        for each resolution in sorted_resolutions:
            compute quality and store quality scores in qualities array

        if is_first_bitrate_flag == 1 # this is the first bitrate
            # Set the initial quality level
            set q_lvl to the minimum resolution value in qualities
            set is_first_bitrate_flag to 0

        create curr_win for qualities above or equal q_lvl

        sort curr_win based on quality values

        if curr_win is empty:
            multiply bitrate by 2
            continue the loop
        set li to lowest resolution index
        select curr_win from index li and forward as acceptable_resolutions

        if no acceptable_resolutions:
            increase q_lvl by q_jnd
            continue the loop

        set N the number of acceptable resolutions
```

```
set i to N -1 # point to the last acceptable resolution, should be the higher in resolution
while i >= 0:
        if rate <= 100 – (100/N) * i:
            break
        decrement i


    append the resolution with the index I from the acceptable resolutions and current bitrate to
optimizedBitRateLadder


    set q_lvl to quality of selected resolution and current bitrate + q_jnd
    multiply bitrate by 2 # jump to the next bitrate


   return optimizedBitRateLadder
```

*Algorithm 1: Used to select representations, return set of representations (bitrate ladder)*

FIGS. 7-8 provide a description of an example representation selection algorithm.

At block 1 of FIG. 7, the input may be a video segment of a duration (e.g., 2s, 4s, and/or the like) defined by the service provider or a video segment determined by a process (e.g., able to detect scene cut similar, or dissimilar complexity features in a video). A video segment may be provided with the (e.g., additional) parameters listed hereafter. For example, an input may be a video segment. The input may include parameters such as content complexity features, minimum bitrate, maximum bitrate, JND operation value, set of resolutions, codec, quality metric, and/or reduction rate.

Content complexity features may include spatio-temporal features (e.g., or bitstream related features and/or the like) extracted using a tool (e.g., using video complexity analysis (VCA)).

A minimum bitrate and/or maximum bitrate may be a range of bitrate values decided by the service provider and/or aligned with the service providers available network bandwidth.

A JND operation value ($q_{JND}$) may be an operation value ensuring that a difference of the quality value metric will not be noticed by the end-user. The operational value may depend on which quality metric is used (e.g., PQ-YPSNR, PQ-MSSIM, VMAF, and/or the like). For example, the operational value may depend on the minimum quality metric value, the bitrate value, and the codec.

A set of resolutions may include a list of the possible resolutions for the bitrate ladder representations (e.g., 1920x1080, 640x360, 1280x720, 2560x1440, 3840x2160, and/or the like).

A quality metric may be a selected quality metric by the service provider.

A reduction rate (e.g., as shown with reference to block 1 of FIG. 7) may be a parameter used to reach a target reduction of the energy with the constructed bitrate ladder.

At block 2 of FIG. 7, an iteration over a (e.g., each) bitrate operation may be performed.

At block 3 of FIG. 7, for an iteration, the quality for the selected resolutions may be computed using the content complexity features as follows (e.g., for each iteration, the quality for all the selected resolutions may be computed using the content complexity features):

$$Estimated\ quality$$
$$= Q_{quality\ metric}(Content\ Complexity\ Features\ /Bitrate, Resolution, codec)$$

In examples, VCA features may be used because the quality model has been trained by using these features (e.g., the quality model has been trained by using the content complexity features, for example, spatio-temporal features).

At block 4 of FIG. 7, for the first bitrate (e.g., only for the first bitrate) the initial quality level $q_{lvl}$ may be set to the quality of a resolution (e.g., set to the quality of the lowest resolution).

At block 5 of FIG. 7, the representations with a quality level above $q_{lvl}$, may be collected as follows:

$$q_{lvl}(b_0 = b_{min}) = \min_{r \in R}(Q(Complexity\ Features\ /\ b_0, r, codec))$$

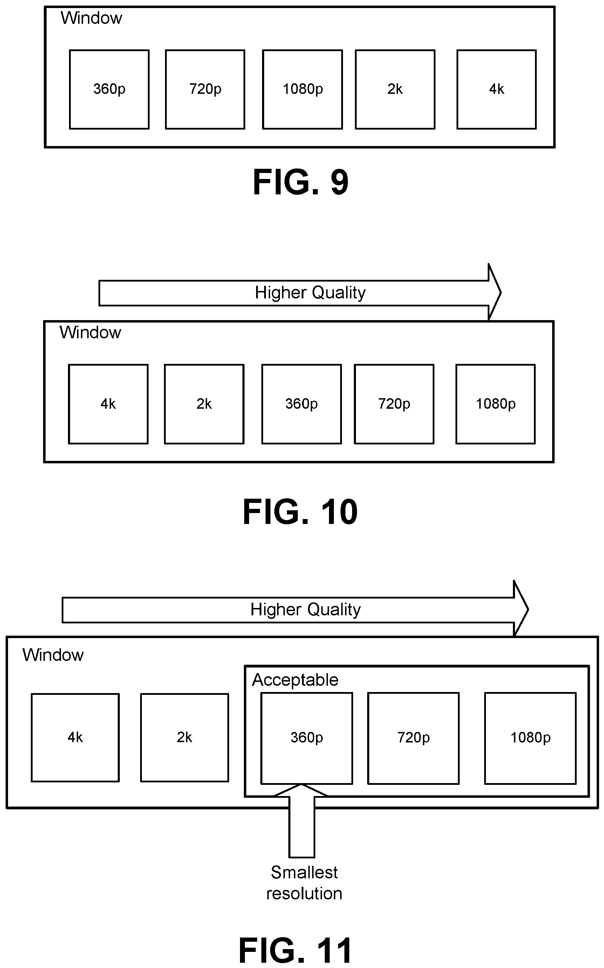

At block 11 of FIG. 7, a window of resolutions $r$ (e.g., as shown in FIG. 9), defined at a bitrate $b_j$, and/or belonging to representations with estimated quality above the $q_{lvl}(b_j)$, may be determined as follows:

$$Window(b_j) = \{r\ /\ Q(Complexity\ Features/\ b_j, r, codec) \geq q_{lvl}(b_j)\}$$

FIG. 9 shows an example resolution window constructed for bitrate $b_j$. The window (e.g., $Window(b_j)$), may be based on estimated quality $Q$ (*Complexity features / $b_j$, r, codec)* where $r \in Window(b_j)$, is (e.g., firstly) sorted from lower to higher quality and/or a resolution may be identified $r_l$ (e.g., the smallest resolution may be identified), as illustrated in FIG. 10.

FIG. 11 shows a resolution window for bitrate $b_j$ sorted from a first quality to a second quality (e.g., the lowest to the higher quality). The set of acceptable resolutions *Acceptable*($b_j$) may be defined as a subset of the window $Window(b_j)$ that includes resolution starting at index $I$ until the end (e.g., an index of the smallest resolution $r_l$ after sorting the window).

$$Acceptable(b_j) = \{r_k \in Window(b_j)\ /\ k \in [l, |Window(b_j)| - 1]\}$$

At block 6 of FIG. 7, by defining a set of acceptable resolutions (e.g., acceptance resolutions), the resolution (e.g., big resolution) that achieves less quality than a smaller resolution (e.g., the smallest resolution) may be eliminated. FIG. 11 shows the example as described with reference to block 6 of FIG. 7.

At block 10 of FIG. 7, a resolution $r_s$ may be selected from the acceptable resolutions array and/or assigned to the bitrate $b_j$. In examples it may be determined that the sum of energy consumption of the encoding and/or decoding functions vary linearly with the resolution. In examples the sum of energy consumption may be modeled as a non-linear relationship with one or more dependencies (e.g., the dependencies may be related to the type of content).

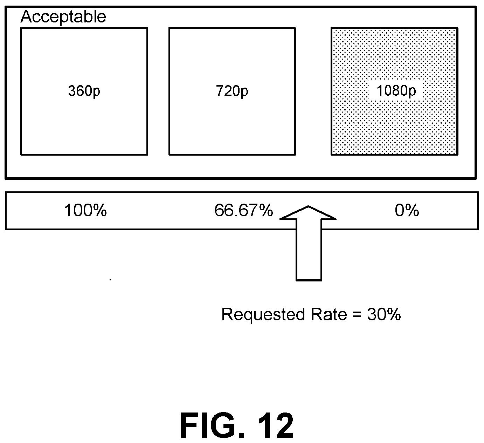

FIG. 12 shows an example of the distribution of $RR_{th}(b_j)$. FIG. 12 shows a threshold $RR_{th}(r_k)$ on acceptable window elements.

In examples, features associated with block 10 of FIG. 7 may be described with reference to FIG. 8.

At block 8 of FIG. 8, a reduction rate threshold $RR_{th}(r_k)$ may be assigned to an element (e.g., each element) in the array of the acceptable resolutions *Acceptable*($b_j$).

At block 7 of FIG. 8, a loop over the elements (e.g., elements of the acceptable resolution array) from the last element to the first element may be performed. While looping, the requested reduction rate RR (e.g., requested by the service provider) may be compared with the thresholds assigned to an element (e.g., each element) of the array $RR_{tk}(r_k)$.

At block 9 of FIG. 8, if for an $r_k$ element of the window, RR <= $RR_{th}(r_k)$, the loop may be left and/or the resolution $r_k$ may be stored to the current bitrate $r_s = r_k$.

At block 2 of FIG. 7, after assigning a resolution $r_s$ to bitrate $b_j$, the next bitrate $b_{j+1}$ may be determined (e.g., until the maximum bitrate $b_{max}$ is surpassed). At a bitrate iteration (e.g., each bitrate iteration), the (e.g., next) $q_{lvl}(b_{j+1})$ may be set as follows:

$$q_{lvl}(b_{j+1}) = Q(Complexity\ Features/\ b_j, r_s, codec) + q_{JND}$$

$q_{lvl}(b_{j+1})$ may be updated (e.g., is only updated) if/when an $r_s$ is assigned to $b_j$. If $Window(b_j)$ is empty, then for the current bitrate $b_j$, a resolution $r$ may not exist if: $Q$(*Complexity Features / $b_j$, r, codec*) >= $q_{lvl}(b_j)$

In examples, if an $r$ that achieves a better-quality level than the previous bitrate is not determined, then an $r_s$ may not be selected.

At block 12 of FIG. 7, if a resolution does not exist, then a next bitrate is moved to, with $q_{lvl}(b_{j+1}) = q_{lvl}(b_j)$.

At block 13 of FIG. 7, if (e.g., as soon as) the maximum bitrate $b_{max}$ is surpassed, the set of pairs $\{b_j, r_j\}$ may be used to generate the energy aware bitrate ladder (e.g., before transmitting it to the encoder).

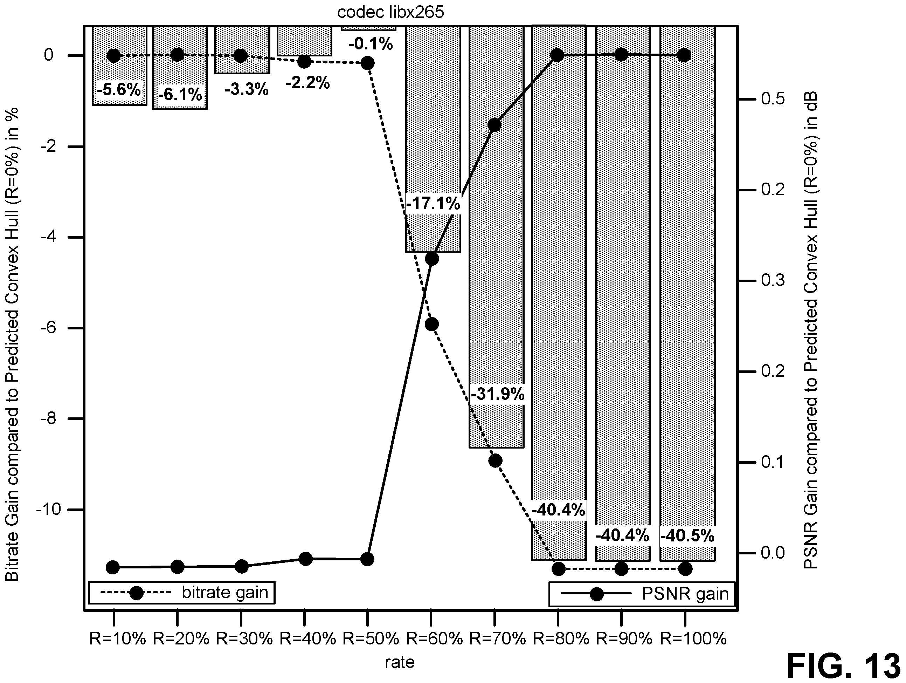

FIG. 13 shows an example of an encoding energy gain compared to a (e.g., the original) convex-hull bitrate ladder for a value of reduction rate included between 10% and 100%. FIG. 13 shows energy, quality, and/or bitrate variation of content after encoding for different ladders at each RR. As illustrated with reference to FIG. 13, the gain may be +0.55 (e.g.,

with PSNR gain approximately -4dB). The bitrate gain may be approximately -12dB, and/or the bitrate gain compared to the predicted convex hull (R=0%) may be approximately -17.1%. Advantageously, a system may vary the RR to achieve an optimal energy efficiency (e.g., a bitrate gain compared to predicted convex hull) while maintaining a sufficient number of bitrates and/or a sufficient quality.

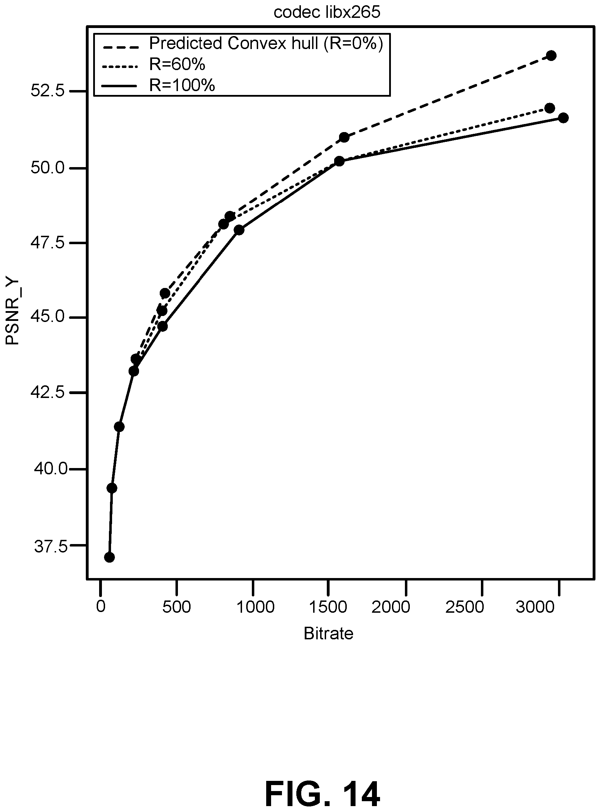

A comparison with a convex hull method may be described. FIG. 14 shows example quality-bitrate curves for an RR of 0, 60, and/or 100. Table 2 shows an example of the selected representations, pairs of resolution, and/or bitrate, by the algorithm for RR of 0, 60, and/or 100. The choice of a lower quality (e.g., with RR=60 and/or RR=100) may impact the quality of the decoded output. The choice of a lower quality may be a tradeoff between the consumption of energy and the quality. RR equals to 0 corresponds to the bitrate ladder in the state of the art.

Table 2: Example representations for the proposed method for different RR(s)

| RR = 0 (Convex Hull) | | RR = 60 | | RR = 100 | |
|---|---|---|---|---|---|
| Resolution | Bitrate | Resolution | Bitrate | Resolution | Bitrate |
| 1280x720 | 300 | 640x360 | 300 | 640x360 | 300 |
| 1280x720 | 600 | 1280x720 | 600 | 1280x720 | 600 |
| 1920x1080 | 1200 | 2560x1440 | 1200 | 1280x720 | 1200 |
| 3840x2160 | 2400 | 2560x1440 | 2400 | 1920x1080 | 2400 |
| 3840x2160 | 4800 | 3840x2160 | 4800 | 3840x2160 | 4800 |

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. HTTP live Streaming (HLS) manifest transmitted over HTTP.

iii. DASH MPD descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A device comprising a processor configured to:

   obtain an indication of a quality metric that represents a trade-off between content features and a parameter associated with energy consumption;
   determine, based on the quality metric, a plurality of quality metric values associated with a plurality of resolutions;
   determine, based on the plurality of quality metric values, an acceptable set of resolutions from the plurality of resolutions;
   determine, based on quality metric values associated with the acceptable set of resolutions, a plurality of energy reduction rates associated with the acceptable set of resolutions;
   select, from the acceptable set of resolutions, a smallest resolution with an energy reduction rate that is less than a maximum energy reduction rate; and
   assign the smallest resolution with the energy reduction rate that is less than the maximum energy reduction rate to a bitrate.

2. The device of claim 1, wherein the parameter associated with energy consumption comprises the bitrate, a resolution associated with a given quality metric value, or a codec.

3. The device of claim 1, wherein the processor is further configured to place the plurality of resolutions in an order based on the plurality of quality metric values, and determining the acceptable set of resolutions from the plurality of resolutions is further based on the order of the plurality of resolutions.

4. The device of claim 3, wherein the order is an ascending order from lowest quality metric value to highest quality metric value.

5. The device of claim 1, wherein the processor being configured to determine, based on the plurality of quality metric values, the acceptable set of resolutions from the plurality of resolutions comprises the processor being configured to:

   place the plurality of resolutions in an order from lowest quality metric value to highest quality metric value; and
   determine that the acceptable set of resolutions comprises a smallest resolution in the plurality of resolutions and any resolutions associated with a quality metric value greater than a quality metric value associated with the smallest resolution in the plurality of resolutions.

6. The device of claim 1, wherein the processor is further configured to add the bitrate and the smallest resolution with the energy reduction rate that is less than the maximum energy reduction rate to a bit rate ladder.

7. The device of claim 1, wherein the bitrate is a first bitrate, the smallest resolution with the energy reduction rate that is less than the maximum energy reduction rate is associated with a quality metric value, and the processor is further configured to:

   for a second bitrate, determine a minimum quality metric value based on the quality metric value associated with the smallest resolution with the energy reduction rate that is less than the maximum energy reduction rate;
   determine, based on the quality metric, a second plurality of quality metric values associated with the plurality of resolutions;
   determine, based on the second plurality of quality metric values and the minimum quality metric value, a second acceptable set of resolutions from the plurality of resolutions; and
   select, from the second acceptable set of resolutions, a resolution to assign to the second bitrate.

8. The device of claim 7, wherein the minimum quality metric value is determined based on a sum of a just noticeable difference (JND) step value and the quality metric value associated with the smallest resolution with the energy reduction rate that is less than the maximum energy reduction rate.

9. The device of claim 1, wherein the quality metric is one of peak signal-to-noise ratio of a Y component (Y-PSNR), multi-scale structural similarity index measure (MSSIM), or video multi-method assessment fusion (VMAF).

10. A method comprising:

obtaining an indication of a quality metric that represents a trade-off between content features and a parameter associated with energy consumption;
determining, based on the quality metric, a plurality of quality metric values associated with a plurality of resolutions;
determining, based on the plurality of quality metric values, an acceptable set of resolutions from the plurality of resolutions;
determining, based on quality metric values associated with the acceptable set of resolutions, a plurality of energy reduction rates associated with the acceptable set of resolutions;
selecting, from the acceptable set of resolutions, a smallest resolution with an energy reduction rate that is less than a maximum energy reduction rate; and
assigning the smallest resolution with the energy reduction rate that is less than the maximum energy reduction rate to a bitrate.

11. The method of claim 10, wherein the parameter associated with energy consumption comprises the bitrate, a resolution associated with a given quality metric value, or a codec.

12. The method of claim 10, wherein the method further comprises placing the plurality of resolutions in an order based on the plurality of quality metric values, and determining the acceptable set of resolutions from the plurality of resolutions is further based on the order of the plurality of resolutions.

13. The method of claim 12, wherein the order is an ascending order from lowest quality metric value to highest quality metric value.

14. The method of claim 10, wherein determining, based on the plurality of quality metric values, the acceptable set of resolutions from the plurality of resolutions comprises:

placing the plurality of resolutions in an order from lowest quality metric value to highest quality metric value; and
determining that the acceptable set of resolutions comprises a smallest resolution in the plurality of resolutions and any resolutions associated with a quality metric value greater than a quality metric value associated with the smallest resolution in the plurality of resolutions.

15. The method of claim 10, wherein the method further comprises adding the bitrate and the smallest resolution with the energy reduction rate that is less than the maximum energy reduction rate to a bit rate ladder.

**FIG. 1**

FIG. 2

ORIGINAL VIDEO → IMAGE PARTITIONER (202)

BITSTREAM ← ENTROPY ENCODER (245)

QUANTIZER (230)

TRANSFORMER (220)

INVERSE QUANTIZER (240)

INVERSE TRANSFORMER (250)

RESIDUAL BLOCKS

PREDICTION BLOCKS

RECONSTRUCTED RESIDUAL BLOCKS

255

RECONSTRUCTED BLOCKS

PREDICTION BLOCKS

INTRA PREDICTOR (260)

IN-LOOP FILTERS (265)

REFERENCE PICTURE BUFFER (280)

PREDICTION ENHANCER (285)

205

MOTION COMPENSATOR (270)

MOTION ESTIMATOR (275)

210

200

FIG. 3

EP 4 723 631 A1

**FIG. 4**

EP 4 723 631 A1

**FIG. 5**

Media Presentation Description

Period ID = 1
Start = 0 seconds
...

Period ID = 2
Start = 60 seconds
...

Period ID = 3
Start = 120 seconds
...

Period ID = 2
Start = 60 seconds

Adaptation set 0

Adaptation set 1

Adaptation set 2

Adaptation set

Representation 1
5 Mbps

Representation 2
2 Mbps

Representation 3
0.5 Mbps

Representation 2
2 Mbps

Segment info

Segment info
Duration = 60 seconds

Initialization segment
http://ex.com/il.mp4

Media segment 1
Start = 0 seconds
http://ex.com/v1.mp4

Media segment 2
Start = 15 seconds
http://ex.com/v2.mp4

Media segment 3
Start = 30 seconds
http://ex.com/v3.mp4

Media segment 4
Start = 45 seconds
http://ex.com/v4.mp4

FIG. 6A

FIG. 6B

FIG. 6C

EP 4 723 631 A1

Input ⟍ 1

b ≤ max bitrate? 2

No

Bitrate ladder

13

Yes

Estimate quality for all resolution and current bitrate b, as Q — 3

Is first iteration?

Yes

Set q_lvl = Q(min Resolution) — 4

No

curr_win = resolution for q_lvl ≤ Q(resolution) — 5

Move to next bitrate — 12

Set q_lvl = Q(selected resolution) + q_ind — 11

Add selected resolution and bitrate to solution

Select Resolution from curr_win — 10

No

Sort curr_win by quality & select from lower resolution quality and up — 6

No

Is curr_win empty?

Yes

**FIG. 7**

FIG. 8

EP 4 723 631 A1

Window

| | | | | |
|---|---|---|---|---|
| 360p | 720p | 1080p | 2k | 4k |

## FIG. 9

Higher Quality →

Window

| | | | | |
|---|---|---|---|---|
| 4k | 2k | 360p | 720p | 1080p |

## FIG. 10

Higher Quality →

Window

Acceptable

| | | | | |
|---|---|---|---|---|
| 4k | 2k | 360p | 720p | 1080p |

Smallest
resolution

## FIG. 11

FIG. 12

FIG. 13

codec libx265

Bitrate Gain compared to Predicted Convex Hull (R=0%) in %

PSNR Gain compared to Predicted Convex Hull (R=0%) in dB

-5.6%  -6.1%  -3.3%  -2.2%  -0.1%  -17.1%  -31.9%  -40.4%  -40.4%  -40.5%

R=10% R=20% R=30% R=40% R=50% R=60% R=70% R=80% R=90% R=100%

rate

bitrate gain

PSNR gain

EP 4 723 631 A1

codec libx265

Predicted Convex hull (R=0%)
R=60%
R=100%

PSNR_Y

Bitrate

# FIG. 14

## EUROPEAN SEARCH REPORT

**Application Number**

EP 24 30 6610

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PREMKUMAR AMRITHA ET AL: "Quality-Aware Dynamic Resolution Adaptation Framework for Adaptive Video Streaming", PROCEEDINGS OF THE 22ND ACM SIGPLAN INTERNATIONAL CONFERENCE ON GENERATIVE PROGRAMMING: CONCEPTS AND EXPERIENCES, ACMPUB27, NEW YORK, NY, USA, 15 April 2024 (2024-04-15), pages 292-298, XP059635016, DOI: 10.1145/3625468.3652172 ISBN: 979-8-4007-0412-3 * sections 1, 3, 3.1, 3.2, 3.4, 4; figure 2; tables 1, 2 * | 1-15 | INV. H04N19/154 H04N19/156 H04N21/2343 H04N21/845 |
| X | GHASEMPOUR MOHAMMAD ET AL: "Energy-Aware Resolution Selection for Per-Title Encoding", ICASSP 2024 - 2024 IEEE INTERNATIONAL CONFERENCE ON ACOUSTICS, SPEECH AND SIGNAL PROCESSING (ICASSP), IEEE, 14 April 2024 (2024-04-14), pages 3790-3794, XP034654749, DOI: 10.1109/ICASSP48485.2024.10447099 [retrieved on 2024-03-18] * sections 1, 2, 2.1, 3 * | 1,10 | |

**TECHNICAL FIELDS SEARCHED (IPC)**

H04N

The present search report has been drawn up for all claims

| Place of search | Date of completion of the search | Examiner |
|---|---|---|
| Munich | 12 March 2025 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)